# EUROPEAN PATENT APPLICATION

(11) **EP 4 572 478 A1**
(43) Date of publication of application: **18.06.2025**
(21) Application number: 23852211.4
(22) Date of filing: 25.05.2023
(51) Int. Cl.: H04W 72/0446, H04W 16/14, H04W 28/06, H04W 92/18

(54) **COMMUNICATION DEVICE AND COMMUNICATION METHOD**

(30) Priority: 09.08.2022 JP 2022127362
(71) Applicant: Panasonic Intellectual Property Corporation of America, Torrance, CA 90504 (US)
(72) Inventor: HORIUCHI, Ayako, Kadoma-shi, Osaka 571-0057 (JP); SUZUKI, Hidetoshi, Kadoma-shi, Osaka 571-0057 (JP); KANG, Yang, Singapore 469332 (SG)
(74) Representative: Grünecker Patent- und Rechtsanwälte PartG mbB
(86) International application number: PCT/JP2023/019502
(87) International publication number: WO 2024/034227

(57) **Abstract**

This communication device comprises: a control circuit that allocates a signal to a guard section that is set to an Nth time resource, among the Nth time resource and an N+1th time resource that are included in a plurality of time resources, when a plurality of contiguous time resources are allocated in terminal-to-terminal communication in an unlicensed band; and a transmission circuit that transmits the signal in the plurality of time resources.

## Description

### Technical Field

The present disclosure relates to a communication apparatus and a communication method.

### Background Art

Enhancement of a communication system called the 5th Generation mobile communication system (5G) has been studied. In 5G, it has been discussed to flexibly provide functions for each of use cases that require an increase in communication traffic, an increase in the number of terminals to be connected, high reliability, and low latency.

### Citation List

### Non-Patent Literature

NPL 1
   3GPP, TR 38.885 V16.0.0, "Study on NR Vehicle-to-Everything (V2X)"
NPL 2
   RP-201385, "WID revision: NR sidelink enhancement," LG Electronics, June 29 - July 3, 2020
NPL 3
   RP-213678, "New WID on NR sidelink evolution," OPPO, LG Electronics, Dec. 6 - 17, 2021
NPL 4
   3GPP, TS 38.212 V17.2.0, "NR; Multiplexing and channel coding"

### Summary of Invention

There is room for consideration, however, with respect to the effective utilization of communication resources in an unlicensed band.

One non-limiting and exemplary embodiment of the present disclosure facilitates providing a communication apparatus and a communication method each capable of improving the resource utilization efficiency of communication in an unlicensed band.

A communication apparatus according to an exemplary embodiment of the present disclosure includes: control circuitry, which, in operation, in a case where a plurality of time resources consecutive in time are allocated in terminal-to-terminal (inter-terminal) communication in a license-exempt band (an unlicensed band), assigns a signal to a guard interval configured in an n-th time resource of the n-th time resource and an n + 1-th time resource included in the plurality of time resources; and transmission circuitry, which, in operation, transmits the signal with the plurality of time resources.

It should be noted that general or specific embodiments may be implemented as a system, an apparatus, a method, an integrated circuit, a computer program, a storage medium, or any selective combination thereof.

According to an exemplary embodiment of the present disclosure, it is possible to improve the resource utilization efficiency of communication in an unlicensed band.

Additional benefits and advantages of the disclosed aspects will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates an example of channel mapping in a slot;
FIG. 2 illustrates an example of channel mapping in a slot at the time of channel busy;
FIG. 3 is a block diagram illustrating an exemplary configuration of a part of a base station;
FIG. 4 is a block diagram illustrating an exemplary configuration of a part of a terminal;
FIG. 5 illustrates an example of sidelink communication in Mode 1;
FIG. 6 illustrates an example of sidelink communication in Mode 1;
FIG. 7 illustrates an example of channel mapping in a slot;
FIG. 8 illustrates an example of sidelink communication in Mode 2;
FIG. 9 is a block diagram illustrating an exemplary configuration of the terminal;
FIG. 10 illustrates another example of channel mapping in a slot;
FIG. 11 illustrates still another example of channel mapping in a slot;
FIG. 12 illustrates yet another example of channel mapping in a slot;
FIG. 13 is a block diagram illustrating another exemplary configuration of a terminal;
FIG. 14 illustrates an exemplary architecture for a 3GPP NR system;
FIG. 15 is a schematic view illustrating a functional split between NG-RAN and 5GC;
FIG. 16 is a sequence diagram of a Radio Resource Control (RRC) connection setup/reconfiguration procedure;
FIG. 17 is a schematic diagram illustrating usage scenarios of enhanced Mobile BroadBand (eMBB), massive Machine Type Communications (mMTC), and Ultra Reliable and Low Latency Communications (URLLC); and
FIG. 18 is a block diagram illustrating an exemplary 5G system architecture for a non-roaming scenario.

### Description of Embodiments

Hereinafter, embodiments of the present disclosure will be described in detail with reference to the drawings.

In the 3rd Generation Partnership Project (3GPP), which is an international standards-developing organization, has been studying development of a communication systems in terms of both the development of the Long Term Evolution (LTE) system and New Radio (NR). In 3GPP, it has been first considered to support vehicle to X (V2X) in the LTE system. It is also considered to support V2X in NR in which a band broader than in LTE is available (see, for example, NPL 1).

In addition to V2X, further enhancement of communication using sidelink (SL) have been studied (see, for example, NPL 2). V2X assumes Vehicle to Vehicle (V2V), Vehicle to Infrastructure (V2I), Vehicle to Pedestrian (V2P), and Vehicle to Network (V2N) communication.

In the V2V, V2I, and V2P, terminals can directly transmit and receive signals to and from each other using a link called sidelink or PC5 without through a network with a base station (for example, network through base station). V2N assumes communication through a link called Uu between a base station and a terminal. Note that the base station may be referred to as gNB in NR or as eNB in LTE. Meanwhile, the terminal may be referred to as User Equipment (UE).

Further, utilization of sidelink communication in an unlicensed band (license-exempt band) has also been studied (see, for example, NPL 3).

### [NR Sidelink]

In NR sidelink, unicast, groupcast, and broadcast are supported in transmission and reception. In unicast, one-to-one transmission from a transmission terminal (also referred to as Tx UE, source UE, or transmission source terminal) to a reception terminal (also referred to as Rx UE, destination UE, or destination terminal) is assumed. In groupcast, transmission from a transmission terminal to one or more reception terminals included in a certain group is assumed. In broadcast, transmission from a transmission terminal without identifying a reception terminal is assumed.

In NR sidelink, a control signal called sidelink control information (SCI) is transmitted and received. The SCI is divided into the 1st-stage SCI and the 2nd-stage SCI. The 1st-stage SCI is mapped to the physical SL control channel (PSCCH). The 2nd-stage SCI is mapped to at least a part of the physical SL shared channel (PSSCH) through which data is transmitted and received. By dividing the SCI into two, the number of bits and the size of the 1st-stage SCI can be reduced. In sidelink, there is a function in which a particular terminal (for example, terminal A) receives PSCCH transmitted from another terminal different from terminal A, and after grasping the usage situation of the resource of the other terminal, determines the resource to be used for transmission by terminal A. This function is also called "sensing."

Note that, in sidelink, signals are transmitted and received through the following channels.
- Physical SL control channel (PSCCH): 1st-stage SCI (sidelink control information) is mapped to PSCCH.
- Physical SL shared channel (PSSCH): a data signal and 2nd-stage SCI are mapped to PSSCH.
- Physical SL feedback channel (PSFCH): a feedback signal for PSSCH is mapped to PSFCH. The feedback signal indicates, for example, an acknowledgement (ACK) indicating that reception of PSSCH is successful, or a negative acknowledgement (NACK) indicating that the reception of PSSCH is not successful. The feedback signal is applicable in a case where PSSCH is transmitted by unicast or groupcast. Further, in Release 17 (Rel. 17) and thereafter, as Inter-UE coordination, PSFCH may be transmitted in a case where a collision is detected.
- Physical SL broadcast channel (PSBCH): a broadcast signal is mapped to PSBCH. PSBCH is transmitted together with a signal for synchronization. The signal for synchronization is, for example, a sidelink Primary synchronization signal (S-PSS) and/or a sidelink Secondary synchronization signal (S-SSS). PSBCH to be transmitted together with a signal for synchronization is also referred to as a sidelink synchronization signal block (S-SSB).

Note that, the signal to be transmitted or received in sidelink may be referred to as a "sidelink signal." Further, for example, "transmission of information (or a signal) mapped to PSCCH" may be abbreviated to "PSCCH transmission". Further, in the following description, PSCCH may refer to a resource defined as PSCCH or information (or a signal) mapped to a resource defined as PSCCH. Even in channels other than PSCCH, abbreviations may be made in the same manner as PSCCH.

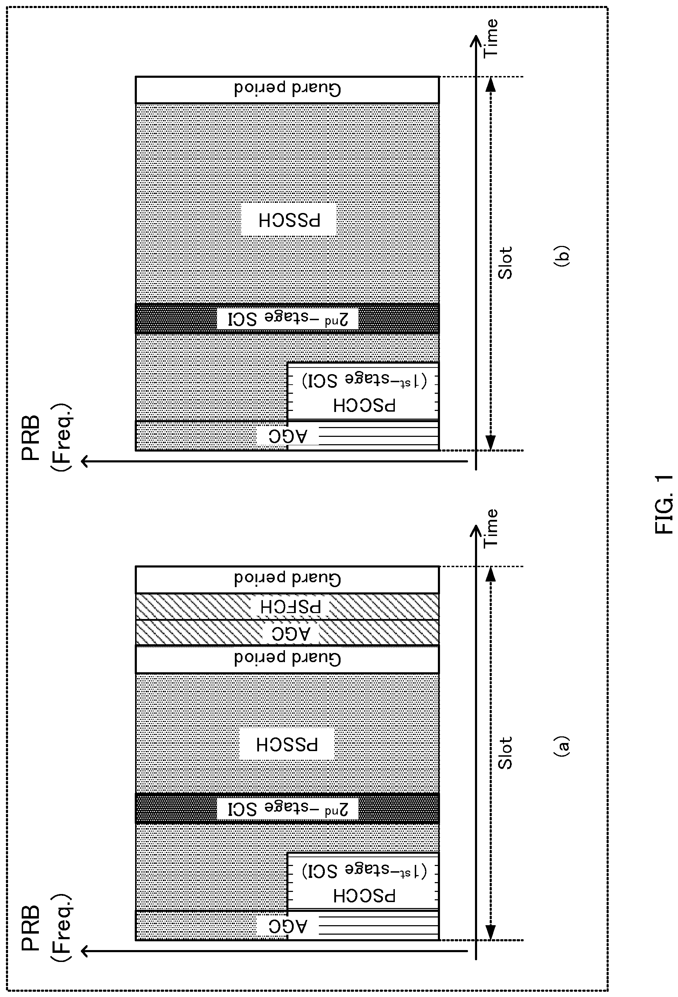

FIG. 1 illustrates exemplary mapping of PSCCH, PSSCH, and PSFCH in a slot. The horizontal axis in FIG. 1 represents the time axis, and the vertical axis represents the frequency axis in PRB (physical resource block) units. FIG. 1 illustrates two examples of (a) and (b).

Note that, as illustrated in (a) of FIG. 1, PSFCH may be mapped. Alternatively, as illustrated in (b) of FIG. 1, PSFCH may not be mapped due to a configuration. In a case where PSFCH is not mapped, the area of PSSCH may be increased.

The number of symbols of the sidelink signal in the slot may be variable depending on a configuration. Further, the mapping of the 2nd-stage SCI is changed due to mapping of a demodulation reference signal (DMRS) of PSSCH, which is not illustrated. The 1st-stage SCI is mapped starting from the lowest frequency resource among frequency resources to which PSSCH is assigned. For auto gain control (AGC), copies of the starting symbols of PSCCH and PSSCH are mapped to the symbols before the starting symbols of PSCCH and PSSCH. Further, as illustrated in (a) of FIG. 1, a copy of PSFCH is also mapped before the symbol of PSFCH for AGC.

Further, in (a) of FIG. 1, a guard interval (may also be referred to as guard period or gap) for switching between transmission and reception is mapped in the interval between PSSCH and PSFCH and in the interval after the last symbol of PSFCH. In (b) of FIG. 1, a guard period for switching between transmission and reception is mapped in the interval after the last symbol of PSSCH. The guard period may correspond to an interval in which no signal is transmitted or received.

The sidelink communication in NR includes two modes that are referred to as Mode 1 and Mode 2. In Mode 1, the base station determines (schedules) a resource to be used by the terminal for sidelink and thus indicates a scheduling result to the terminal. In Mode 2, the terminal determines (or selects) a resource to be used for sidelink from resources in a resource pool configured in advance. Mode 1 represents a state in which the base station and the terminal are connected with each other, and is assumed to be used in an environment in which the terminal performing sidelink communication can receive an indication from the base station. In Mode 2, the terminal can perform transmission in sidelink without an indication from the base station, and thus, sidelink communication can be performed with terminal under a different operator and/or a terminal existing outside the coverage of the base station.

A resource used for sidelink is configured by, for example, a sidelink band width part (SL BWP) and a resource pool.

SL BWP specifies a frequency band that can be used for sidelink and is configured separately from a downlink Band width part (DL BWP) and an uplink Band width part (UL BWP) configured between a base station and a terminal (Uu). For example, the frequency band of the SL BWP may overlap with the UL BWP.

The resource pool is resources within the SL BWP, and resources in the frequency direction and time direction are specified by the resource pool. For example, a plurality of resource pools may be configured for one terminal. Frequency resources in a resource pool can be divided into units called subchannels, and resource allocation can be configured in subchannel units. The subchannel includes a plurality of physical resource blocks (PRBs), and PSSCH can be assigned in units of subchannels, which are groups of a plurality of PRBs.

### [NR-Unlicensed (NR-U)]

With enhanced communication capacity, the utilization of an unlicensed band in addition to a licensed band has also been studied in the 3GPP. NR that utilizes an unlicensed band is also referred to as NR-U (unlicensed). In NR-U, operations to ensure fairness in coexistence with other apparatuses, such as LAA (Licensed Assisted Access) based on Wifi (registered trademark) and/or LTE, are added and enhanced.

In the unlicensed band, a communication apparatus (for example, the base station or the terminal in NR-U) performs Listen Before Talk (LBT) in order to ensure fairness with other apparatuses, and starts transmission after confirming that another apparatus is not transmitting a signal nearby. The term LBT may be replaced with other terms such as carrier sense or sensing. The communication apparatus performs the LBT and confirms that another apparatus is not transmitting a signal nearby, and then a channel occupancy time (COT), which is the time of a channel occupancy, is configured for the communication apparatus. In the COT, the communication apparatus can transmit and receive signals in DL (downlink) resources and UL (uplink) resources.

There are two operation methods for the LBT. The first operation method is load based equipment (LBE). In LBE, when a communication apparatus acquires the COT, the communication apparatus performs Type 1 channel access (also referred to as category 4 LBT or Type 1 LBT). Further, in a portion other than the beginning of the COT, the communication apparatus can perform Type 2 channel access (also referred to as Type 2 LBT) and can start transmission after the performance.

Note that, in the following description, the communication apparatus (for example, the base station or the terminal) "starts transmission after performing the LBT" corresponds to the communication apparatus starting transmission after confirming that the LBT has been performed and that no other apparatus is transmitting a signal nearby.

Table 1 illustrates examples of the sensing interval of LBT for downlink transmission right acquisition in DL and the applicable interval in LBE.

**[Table 1]**

| | Sensing interval | Applicable gap duration | |
|---|---|---|---|
| Type 1 (cat 4 LBT) | Determined by random backoff value | - | In a case where gNB (base station) or UE (terminal) acquires COT |
| | Extended when acquisition of the transmission right is unsuccessful | | |
| Type 2A (cat 2 LBT) | 25 µs | - | Transmission of Discovery Reference Signal (DRS) |
| | | 25 µs | Transmission in COT |
| Type 2B (cat 2 LBT) | 16 µs | 16 µs | Transmission in COT |
| Type 2C (cat 1 LBT) | (Not sense) | < 16 us for LBE | Transmission in COT |

In Type 2A, when the interval between two temporally continuous resources is 25 µs, the terminal performs LBT within 25 µs. In a case where the terminal does not confirm transmission from another apparatus in the LBT, the terminal can start transmission.

In Type 2B, when the interval between two temporally continuous resources is 16 µs, the terminal performs the LBT in 16 µs. In a case where the terminal does not confirm transmission from another apparatus, the terminal can start transmission.

In Type 2C, in a case where the interval between two temporally continuous resources is less than 16 microseconds, the terminal can start transmission without the LBT. Note that, exceptionally, in the case of DRS (Discovery Reference Signal) transmission, due to the short transmission time for the DRS, Type 2A LBT instead of Type 1 LBT is performed, and the transmission can be started.

A second operation method is frame based equipment (FBE). The FBE is an operation in which it is assumed that other equipment such as Wifi is not installed in the same space, the frame period is fixed, and the LBT is performed at the beginning of the frame to acquire the COT. In the FBE, the COT can be acquired only from the beginning of the fixed frame period. Further, the FBE is defined to include an idle period of 5% or more for each fixed frame period.

### NR-U has been described, thus far.

In each of the following embodiments, an example in which sidelink communication is performed in an unlicensed band will be described. The sidelink communication using the unlicensed band may also be referred to as Sidelink unlicensed (SL-U).

In the unlicensed band, a terminal performs LBT and starts transmission when no transmission from another apparatus is confirmed. On the other hand, in the unlicensed band, the terminal performs LBT and detects a signal of another apparatus, and does not start the transmission when the transmission from another apparatus is confirmed. A case where a signal of another apparatus is detected is also referred to as "busy (or channel busy)," "unavailable," or "LBT failure."

In the case of the LBT failure, the terminal cannot acquire the transmission right of the allocated resource or the selected resource and thus cannot start the transmission, even in sidelink.

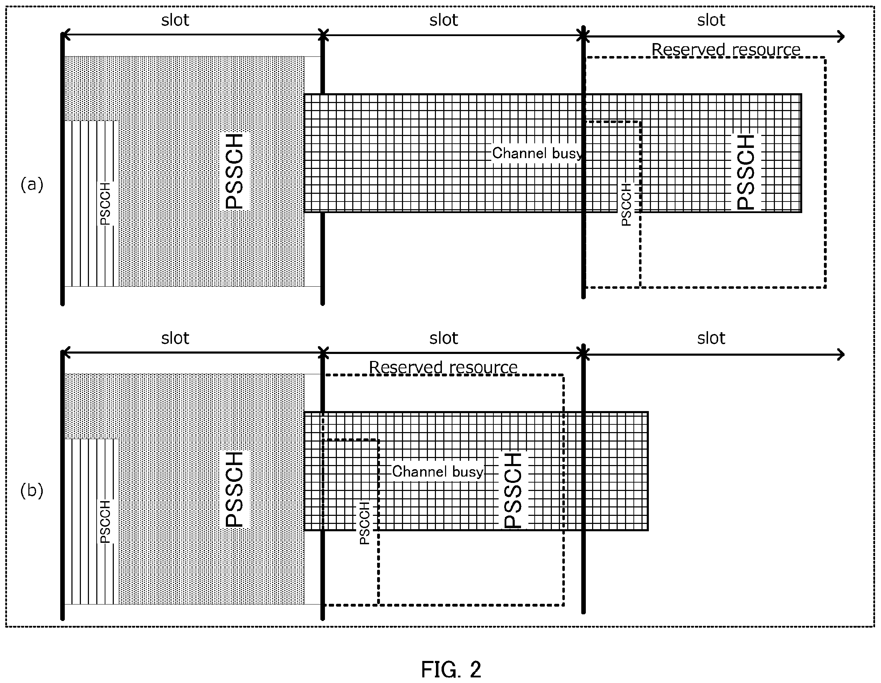

FIG. 2 illustrates an example of channel mapping in each slot in the case of the LBT failure.

For example, FIG. 2 illustrates, in (a), an example of a case where another apparatus starts transmission in a slot located before the slot in which the terminal is scheduled to transmit (slot in which resource is reserved). Further, FIG.2 illustrates, in (b), an example of a case where another apparatus starts transmission in a symbol immediately before the slot in which the terminal is scheduled to transmit. As illustrated in (a) and (b) of FIG. 2, the terminal performs LBT prior to the slot in which the terminal is scheduled to transmit, which results in the LBT failure, so that transmission of a sidelink signal cannot be started. For example, as illustrated in (b) of FIG. 2, even when the terminal uses consecutive slots and attempts to transmit within a COT by performing LBT Type 2, the transmission right may be acquired by another apparatus.

In a non-limiting and exemplary embodiment of the present disclosure, a description will be given of a method for allocating or selecting the next resource in a case where a terminal cannot acquire the transmission right in sidelink communication in an unlicensed band. Additionally, in a non-limiting and exemplary embodiment of the present disclosure, a description will be given of a method for reducing the number of times of performing LBT or the occurrence of LBT failure in a case where a terminal uses consecutive slots in sidelink communication in an unlicensed band.

Note that in each embodiment described below, sidelink communication is given as an example, but the present disclosure is not limited to the sidelink communication.

### [Overview of Communication System]

A communication system according to an embodiment of the present disclosure includes base station 100 and terminal 200.

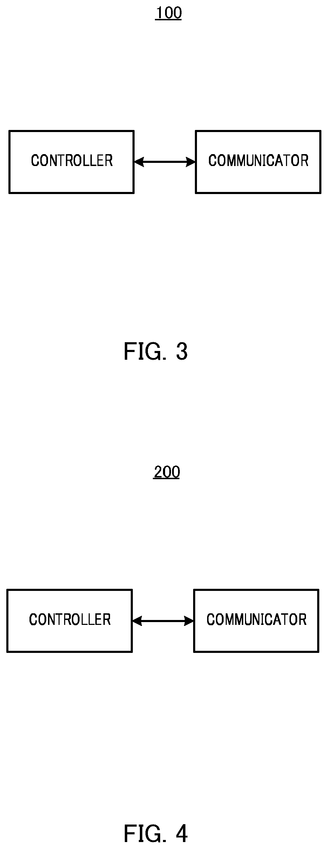

FIG. 3 is a block diagram illustrating an exemplary configuration of a part of base station 100. In base station 100 illustrated in FIG. 3, a controller controls communication via a link called Uu between terminal 200 and base station 100. A communicator transmits a signal via a link called Uu under the control of the controller. Further, the controller may perform control related to sidelink communication between a plurality of terminals (e.g., resource determination in Mode 1).

FIG. 4 is a block diagram illustrating an exemplary configuration of a part of terminal 200 (for example, corresponding to a communication apparatus). In terminal 200 illustrated in FIG. 4, a controller (for example, corresponding to control circuitry), in a case where a plurality of time resources consecutive in time (for example, slots) are allocated in terminal-to-terminal communication in an unlicensed band, assigns a signal to a guard interval (for example, guard period) configured in an n-th time resource of the n-th time resource and an n + 1-th time resource included in the plurality of time resources. A communicator (for example, corresponding to communication circuitry) transmits the signal with the consecutive time resources. Note that, the transmission signal may be, for example, a sidelink signal, or may be a signal different from a sidelink signal.

### (Embodiment 1)

In the present embodiment, in a case where the LBT failure occurs and the transmission right cannot be thus acquired, terminal 200 performs an indication to request an instruction on the next resource from base station 100 or a configuration of a resource selectable by terminal 200. In this manner, terminal 200 can prepare a resource for a signal that cannot be transmitted due to the LBT failure.

Hereinafter, operation examples according to the present embodiment will be each described.

### [Operation Example 1]

In Operation Example 1, an operation example in a case where base station 100 specifies a resource in Mode 1 in sidelink will be described.

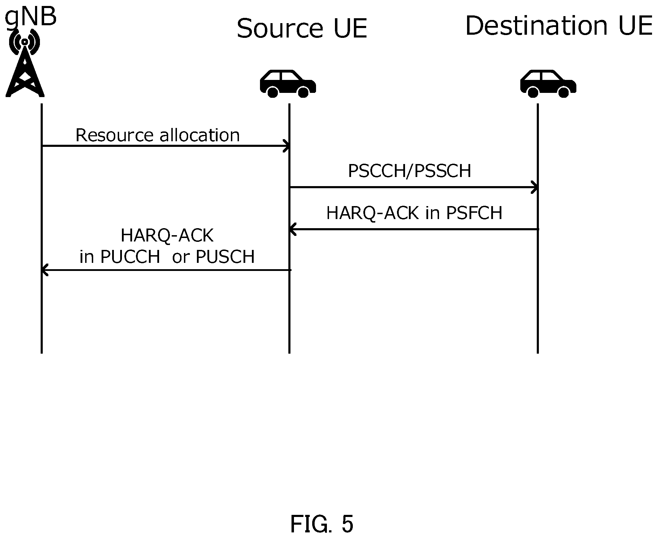

FIG. 5 illustrates an operation example in sidelink Mode 1. The operation example illustrated in FIG. 5 indicates an operation example in a case where it is confirmed by LBT that no other apparatus performs transmission (in a case of LBT OK).

In Mode 1, base station 100 (gNB) indicates resource allocation for sidelink communication to transmission source terminal 200 (source UE). The resource allocation for sidelink communication may be indicated by, for example, DCI format 3_0. Note that base station 100 may specify a plurality of resources for sidelink to terminal 200.

Transmission source terminal 200 transmits, to destination terminal 200 (destination UE), a sidelink signal such as PSCCH and/or PSSCH (hereinafter, also referred to as "PSCCH/PSSCH") in accordance with the resource allocation (for example, a resource pool, a time resource (for example, a slot), a frequency resource (for example, a PRB)) indicated by base station 100. Transmission source terminal 200 may indicate at least one resource indicated by, for example, DCI format 3_0 to destination terminal 200 via PSCCH (SCI format 1A). Note that transmission source terminal 200 may start transmission of the sidelink signal in a case where the result of LBT is LBT OK.

Destination terminal 200 receives PSCCH/PSSCH from transmission source terminal 200, and in a case where HARQ feedback is configured, for example, transmits information on HARQ-ACK including ACK or NACK to transmission source terminal 200 using a PSFCH resource.

Transmission source terminal 200, for example, indicates the information on HARQ-ACK received from destination terminal 200 to base station 100 via a Physical Uplink Control Channel (PUCCH) or a Physical Uplink Shared Channel (PUSCH).

Note that, in sidelink Mode 1 in SL-U, it is also assumed that base station 100 does not perform LBT (or sensing) in the unlicensed band. For example, in FIG. 5, in a resource specified by base station 100, when transmission source terminal 200 performs LBT and the result of LBT is the LBT failure, the transmission of PSCCH/PSSCH in sidelink is stopped. Thus, in a case where terminal 200 cannot perform transmission due to the result of LBT (for example, in a case of LBT failure), base station 100 cannot identify that terminal 200 cannot transmit a sidelink signal (for example, LBT failure). For this reason, in sidelink Mode 1, base station 100 cannot allocate the next resource (or a new resource) for sidelink for terminal 200.

Accordingly, in Operation Example 1, transmission source terminal 200 indicates the LBT failure to base station 100.

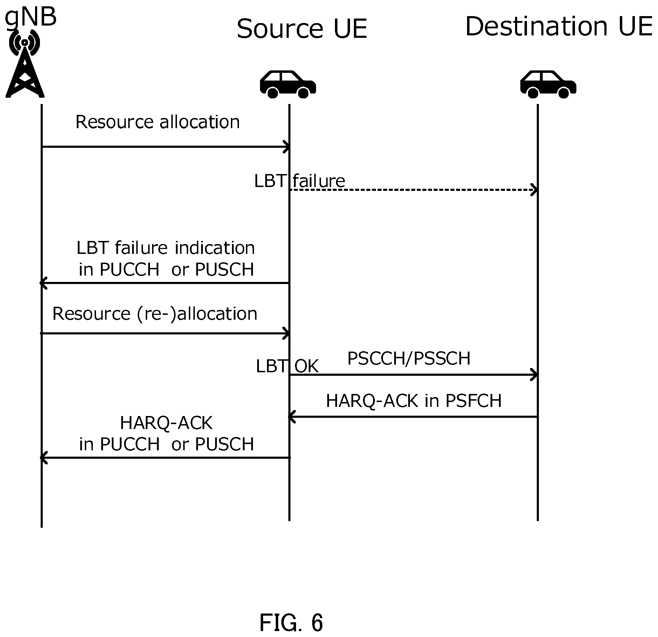

FIG. 6 illustrates an operation example in sidelink Mode 1 according to Operation Example 1.

In FIG. 6, base station 100 (gNB) indicates the resource allocation for sidelink communication to transmission source terminal 200 (source UE) in the same manner as in FIG. 5.

Transmission source terminal 200 performs LBT in the sidelink resource allocated from base station 100. In a case where the result of LBT is the LBT failure, transmission source terminal 200 stops the transmission of PSCCH/PSSCH in sidelink. Thus, the destination terminal cannot detect PSCCH, and therefore receives no PSSCH.

Transmission source terminal 200 transmits an indication of the LBT failure (LBT failure indication) to base station 100. The LBT failure indication may be transmitted, for example, via uplink (for example, PUCCH or PUSCH) between transmission source terminal 200 and base station 100.

When receiving the LBT failure indication, for example, base station 100 may allocate (or reallocate) an additional resource for transmission source terminal 200 if necessary. Base station 100 indicates, to transmission source terminal 200, resource (re-)allocation for sidelink communication. Note that, for example, base station 100 need not allocate an additional resource for transmission source terminal 200 based on the congestion level of other communications or the reliability of the transmission signal.

In a case where an additional resource is allocated from base station 100, transmission source terminal 200 performs LBT in the additionally allocated resource. In a case where the result of LBT is OK, transmission source terminal 200 transmits PSCCH/PSSCH to destination terminal 200 using the additional resource. Then, destination terminal 200 receives PSCCH/PSSCH from transmission source terminal 200 in the same manner as in FIG. 5, and in a case where HARQ feedback is configured, for example, transmits information on HARQ-ACK including ACK or NACK to transmission source terminal 200 using a PSFCH resource. Further, transmission source terminal 200 indicates the information on HARQ-ACK received from destination terminal 200 to base station 100 via PUCCH or PUSCH, in the same manner as in FIG. 5, for example.

As described above, according to Operation Example 1, even in a case where the LBT failure occurs in transmission source terminal 200 (in a case where the transmission right cannot be acquired), additional resource allocation for the transmission of the sidelink signal can be performed by the indication of the LBT failure to base station 100 from transmission source terminal 200.

Note that, a new DCI format may be configured for the indication for sidelink Mode 1 in SL-U.

Next, a description will be given of an exemplary method in which transmission source terminal 200 indicates the LBT failure to base station 100.

Hereinafter, as an example, a case will be described where a resource for transmitting, from transmission source terminal 200 to base station 100, HARQ-ACK (information on ACK or NACK) that has been received by transmission source terminal 200 from destination terminal 200 is used as a resource to be used for the LBT failure indication. Note that the resource used for the LBT failure indication is not limited to the resource for HARQ-ACK and may be other resources.

### <Indication Method 1>

In Indication Method 1, transmission source terminal 200 indicates an LBT failure to base station 100 by not transmitting, to base station 100, HARQ-ACK (information on ACK or NACK) received from destination terminal 200.

In a case where base station 100 does not receive HARQ-ACK to be transmitted from transmission source terminal 200 in a resource specified in advance, base station 100 recognizes that there is a possibility that an LBT failure has occurred in transmission source terminal 200.

For example, in a case where PUCCH format 0 is used for the transmission of HARQ-ACK from transmission source terminal 200 to base station 100, as indicated in Table 2, transmission source terminal 200 indicates the LBT failure to base station 100 by not transmitting PUCCH.

**[Table 2]**

| HARQ-ACK Value | 0 (NACK) | 1 (ACK) | LBT failure |
|---|---|---|---|
| Sequence cyclic shift m_cs | 0 | 6 | N/A |

### <Indication Method 2>

In Indication Method 2, transmission source terminal 200 indicates an LBT failure to base station 100 by transmitting the same signal as NACK in the resource for transmitting, to base station 100, HARQ-ACK that has been received from destination terminal 200.

For example, in a case where PUCCH format 0 is used for the transmission of HARQ-ACK from transmission source terminal 200 to base station 100, as indicated in Table 3, transmission source terminal 200 indicates the LBT failure to base station 100 by transmitting PUCCH format 0 using the same value as NACK (for example, the value of sequence cyclic shift).

**[Table 3]**

| HARQ-ACK Value | 0 (NACK)/LBT failure | 1 (ACK) |
|---|---|---|
| Sequence cyclic shift m_cs | 0 | 6 |

Base station 100 receives the LBT failure indication as HARQ-ACK that has been received by transmission source terminal 200 from destination terminal 200 in the resource specified in advance, for example. Note that base station 100 does not distinguish between NACK and the LBT failure in received PUCCH format 0, but can recognize that the reception is not successful in sidelink communication.

Note that the PUCCH format used for the LBT failure indication is not limited to PUCCH format 0, and the LBT failure indication can be performed with the same signal as NACK even in a case where a format different from PUCCH format 0 is used or a channel or a signal different from PUCCH is used.

### <Indication Method 3>

In Indication Method 3, transmission source terminal 200 indicates an LBT failure to base station 100 by allocating a signal different from ACK and NACK to the LBT failure in a resource for transmitting, to base station 100, HARQ-ACK that has been received from destination terminal 200.

For example, in a case where PUCCH format 0 is used for the transmission of HARQ-ACK from transmission source terminal 200 to base station 100, Sequence cyclic shift m_cs = 3 may be allocated to the LBT failure as indicated in Table 4. Note that m_cs = 3 is an example, and the LBT failure may be allocated to a sequence different from the sequence (m_cs) to which ACK and NACK are allocated. For example, m_cs = 9 or another value may be used.

**[Table 4]**

| HARQ-ACK Value | 0 (NACK) | LBT failure | 1 (ACK) |
|---|---|---|---|
| Sequence cyclic shift m_cs | 0 | 3 | 6 |

Base station 100 receives, for example, the LBT failure indication as HARQ-ACK that has been received by transmission source terminal 200 from destination terminal 200 in the resource specified in advance. Base station 100 can distinguish between ACK and NACK on one hand, and the LBT failure on the other hand in received PUCCH format 0. For example, base station 100 may determine the resource amount to be allocated for retransmission in response to NACK and the resource amount to be allocated for transmission in response to the LBT failure individually (for example, the resource amounts may be different).

Note that the PUCCH format used for the LBT failure indication is not limited to PUCCH format 0. For example, a format different from PUCCH format 0, or a channel or signal different from PUCCH may be used.

For example, transmission source terminal 200 may indicate the LBT failure to base station 100 by allocating two bits in advance to PUCCH or PUSCH, which is a resource for transmitting, from transmission source terminal 200 to base station 100, HARQ-ACK that has been received by transmission source terminal 200 from the destination terminal, and configuring one state of the states represented by the two bits (for example, four states) on the LBT failure. Table 5 indicates an example in which one state (01) of the states represented by two (for example, four states) bits is configured on the LBT failure. Note that, in Table 5, a case has been described where the state in which two bits represent 01 is configured on the LBT failure, but the LBT failure may be configured to other states.

**[Table 5]**

| HARQ-ACK Value | 0 (NACK) | LBT failure | 1 (ACK) | - |
|---|---|---|---|---|
| | 00 | 01 | 11 | 00 |

### [Operation Example 2]

In Operation Example 2, an operation example in a case where base station 100 specifies a resource in Mode 1 in sidelink will be described.

In Operation Example 2, in a case where the transmission source terminal 200 in Mode 1 experiences an LBT failure and cannot transmit a sidelink signal in the resource indicated from base station 100, the terminal selects a resource and performs sidelink communication as in Mode 2. In Mode 1, the operation of performing resource selection as in Mode 2 may also be referred to as "Mode 2 like behavior."

Thus, transmission source terminal 200 can perform sidelink communication in a resource different from the resource in which the LBT failure occurs, without waiting for an indication of resource allocation from base station 100, thereby reducing latency.

As the resource selected by transmission source terminal 200 in the case of the LBT failure, for example, a resource for a Configured grant that is (pre-)configured by the base station may be configured. For example, in a case where the LBT failure occurs in a certain slot and there is a transmittable resource configured by base station 100 in a slot located later than this slot, transmission source terminal 200 may perform LBT on the slot. When the LBT is ok, transmission source terminal 200 may use a resource within the slot to perform transmission to destination terminal 200.

In a case where there are a plurality of slots including transmittable resources, transmission source terminal 200 may select, for example, a resource with lower received power (for example, Reference Signal Received Power (RSRP)) from among the plurality of resources, in the same manner as the resource selection in Mode 2. Note that the resource selection is not limited to this, and a resource with higher received power may be selected from among the plurality of resources. Further, transmission source terminal 200 may determine the resource based on information on communication quality such as Channel Quality Indicator (CQI) feedback.

Further, as another resource selection method, for example, even in a case where the resource for the Configured grant is not indicated from base station 100, transmission source terminal 200 may select a resource in the same manner as in the resource selection in Mode 2 based on the determination of transmission source terminal 200, and then may perform transmission to destination terminal 200 using the selected resource. Further, instead of the resource selection in Mode 2, a method called random selection, in which a resource is randomly selected from among a plurality of resources, may be applied.

According to Operation Example 2, even in a case where transmission source terminal 200 experiences the LBT failure (cannot acquire the transmission right) and cannot perform sidelink transmission with the resource indicated by base station 100, transmission source terminal 200 can perform the transmission to destination terminal 200 using the selected resource without waiting for an indication from base station 100 by selecting the resource to be used for the sidelink transmission performed by transmission source terminal 200.

### <Variation of Operation Example 2>

In a case where Operation Example 2 is applied, a CP length, which is referred to as cyclic prefix (CP) extension, may be different between transmission in Mode 1 (for example, Mode 1 behavior) using the resource indicated from base station 100 and transmission like in Mode 2 (for example, Mode 2 like behavior) using the resource selected by transmission source terminal 200.

For example, the longer the CP length is and the earlier the scheduled transmission starting position is in a time direction, the easier it is to acquire the transmission right, and thus, terminal 200 is more likely to start transmission while another terminal is performing channel sensing for LBT. Hence, the longer the CP length is, the more likely terminal 200 is to preferentially transmit a signal using the resource.

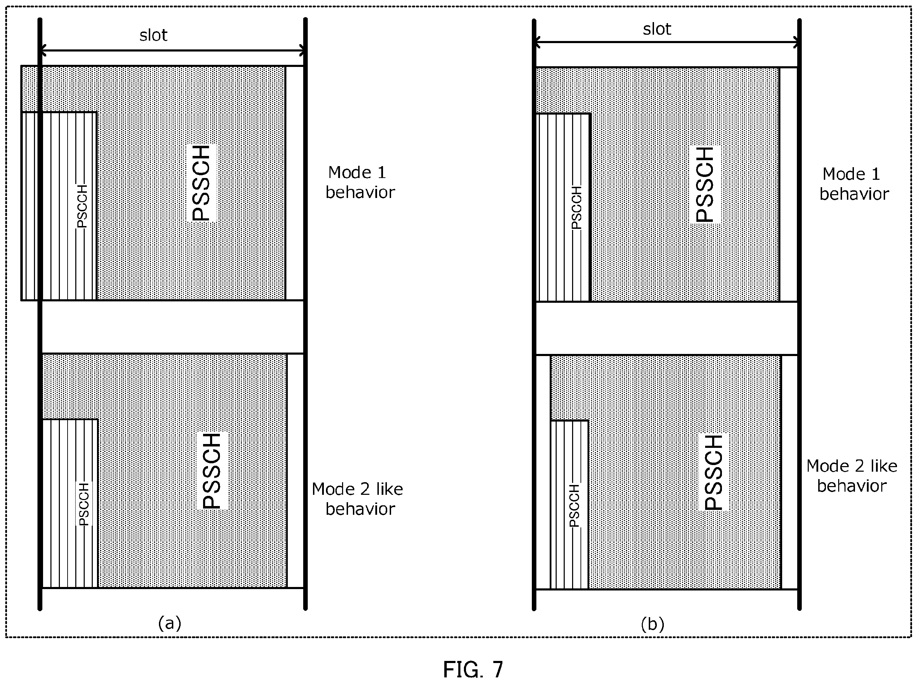

FIG. 7 illustrates an example of channel mapping in a slot in the variation of Operation Example 2.

For example, in a case where the resource indicated from base station 100 is prioritized, the CP length for the transmission in Mode 1 may be set to be longer than the CP length for the transmission like in Mode 2, as illustrated in (a) of FIG. 7. For example, as illustrated in (a) of FIG. 7, in the transmission in Mode 1, a channel may be mapped before the beginning of a slot, and the transmission may be started before the beginning of the slot. Thus, in (a) of FIG. 7, the transmission in Mode 1 is more likely to result in LBT OK and is more likely to be prioritized compared to the transmission like in Mode 2.

Further, as another method, in a case where the resource indicated from base station 100 is prioritized, the transmission in Mode 1 is started from the beginning of the slot as illustrated in (b) of FIG. 7, whereas the transmission like in Mode 2 may be started from a position behind the beginning of the slot. Thus, in (b) of FIG. 7, the transmission in Mode 1 is more likely to result in LBT OK and is more likely to be prioritized compared to the transmission like in Mode 2. For example, the transmission like in Mode 2 may be started from one symbol later from the beginning of the slot or from the middle of a first symbol. For example, in a case where the transmission like in Mode 2 starts from the middle of the first symbol, the CP length of the signal in the second symbol may be extended to the first symbol and the transmission may be performed. In this manner, the first symbol of the slot becomes a symbol used for AGC, and all or a part of the symbol is not used for transmission; however, the transmission in Mode 1 can be prioritized, and the time for sensing for the transmission in Mode 1 can be reserved.

Note that Operation Example 2 may be combined with Operation Example 1. In this case, in Indication Method 2 or Indication Method 3 of Operation Example 1, base station 100 may recognize, upon receiving an indication of an LBT failure, that transmission source terminal 200 has selected a resource and performed communication in sidelink.

### [Operation Example 3]

In Operation Example 3, an operation example in a case where transmission source terminal 200 selects a resource in Mode 2 in sidelink will be described.

In Mode 2 in which transmission source terminal 200 selects a resource, transmission source terminal 200 indicates, to destination terminal 200, that the LBT failure has occurred and a sidelink signal cannot be transmitted in the scheduled resource. Note that Operation Example 3 can also be applied to the Mode 1 transmission.

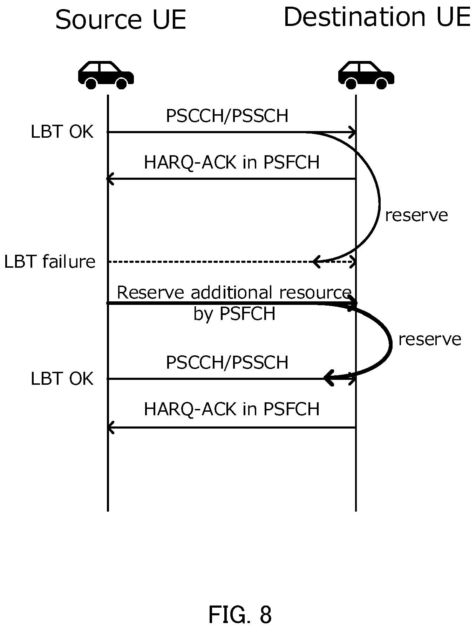

FIG. 8 illustrates operation examples of transmission source terminal 200 and destination terminal 200 in Operation Example 3.

In FIG. 8, transmission source terminal 200 (source UE) transmits a sidelink signal (for example, PSCCH/PSSCH) to destination terminal 200 (destination UE). A plurality of resources can be allocated for the 1st stage SCI included in PSCCH, and for example, resource reservation (Reserve) in a later slot is also possible. Note that transmission source terminal 200 may start transmission in sidelink signal in a case where the result of LBT is LBT OK.

When receiving PSCCH/PSSCH, destination terminal 200 recognizes that there is resource allocation (reservation) in another slot located later than the slot in which PSCCH/PSSCH has been received. In a case where HARQ feedback is configured, for example, destination terminal 200 transmits, to transmission source terminal 200, HARQ-ACK including ACK or NACK using a PSFCH resource. Transmission source terminal 200 may perform retransmission control or the like based on, for example, HARQ-ACK from destination terminal 200 (not illustrated).

Further, in FIG. 8, transmission source terminal 200 performs transmission processing for destination terminal 200 using a later resource reserved by the 1st stage SCI, for example. Here, for example, in the resource reserved for the transmission addressed to destination terminal 200 (for example, an unlicensed band), when the LBT result is the LBT failure, transmission source terminal 200 transmits no sidelink signal.

In Operation Example 3, when the reserved resource results in the LBT failure, transmission source terminal 200 transmits, to destination terminal 200, information indicating that no sidelink signal can be transmitted in the scheduled resource (for example, the LBT failure indication). Further, transmission source terminal 200 may indicate, to destination terminal 200, information on allocation (or reservation) of an additional resource in addition to the LBT failure indication, for example.

For example, a PSFCH resource for a scheduled resource may be used for the LBT failure indication. The PSFCH resource is a resource that is originally used for the transmission of HARQ-ACK from destination terminal 200 to transmission source terminal 200 (for example, in a case of LBT OK), but in a case of the LBT failure, the PSFCH resource serves as a resource used for the LBT failure indication from transmission source terminal 200 to destination terminal 200.

Table 6 indicates an example of an indication of an LBT failure transmitted from transmission source terminal 200 to destination terminal 200. For example, as indicated in Table 6, the occurrence of the LBT failure and the non-reservation of an additional resource may be indicated by Sequence cyclic shift = 0 of PSFCH, and the occurrence of the LBT failure and the reservation of the additional resource may be indicated by Sequence cyclic shift = 6 of PSFCH.

**[Table 6]**

| Value | LBT failure and no reservation | LBT failure and reserve additio nal resource |
|---|---|---|
| Sequence cyclic shift | 0 | 6 |

Further, in a case where the occurrence of the LBT failure and the additional resource reservation are indicated, reservation of a new resource may be configured after X slots of a resource reserved in the (pre-) configuration (for example, a resource in which an LBT failure has occurred), for example. By way of example, the value of X may be 4 slots, 5 slots, 10 slots, or other values.

Further, a frequency resource among the additional resource may be the same as the frequency resource in the pre-configured reservation resource. This eliminates the need for an indication of a frequency position in the additional resource, which allows transmission source terminal 200 to specify the position of the additional resource (resource position in the time direction and the frequency direction) even when the number of bits used for the LBT failure indication is one bit.

When not receiving PSCCH/PSSCH in the reserved resource, destination terminal 200 attempts to receive a signal in the PSFCH resource corresponding to the reserved resource. Then, when receiving PSFCH from transmission source terminal 200 and receiving the indication of the occurrence of an LBT failure and the indication of additional resource allocation, destination terminal 200 attempts to receive PSCCH/PSSCH in the additional resource. When receiving PSCCH/PSSCH in the additional resource, for example, destination terminal 200 transmits HARQ-ACK including ACK or NACK to transmission source terminal 200 using the PSFCH resource.

In Operation Example 3, for example, in a case where the LBT failure occurs, terminal 200 can additionally reserve a resource that has not been reserved in advance, thereby securing a transmission resource in sidelink and reducing latency.

Note that, in Operation Example 3, an additional resource need not be reserved in a case where no additional resource is necessary, for example, a case where transmission with the next reserved resource is sufficient or a case where re-selection of a resource is sufficient.

Further, when receiving the LBT failure indication, destination terminal 200 can easily be switched to a reception mode in preparation for reception of an additionally reserved resource. Further, even when not receiving the LBT failure indication, destination terminal 200 may receive PSCCH/PSSCH from transmission source terminal 200 as an additional resource allocation.

### [Configuration of Terminal 200]

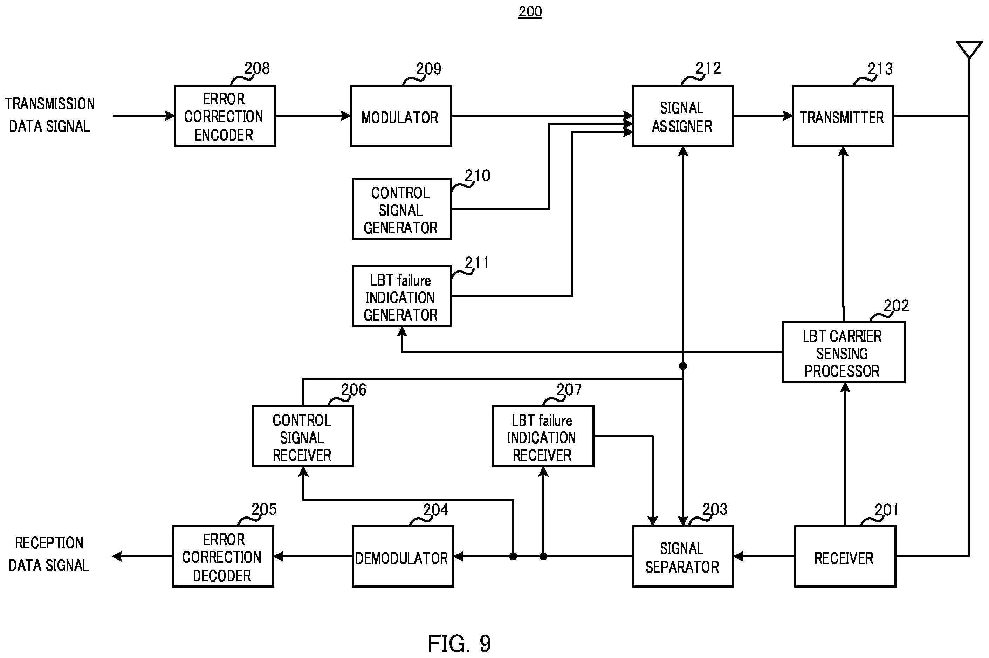

FIG. 9 is a block diagram illustrating an exemplary configuration of terminal 200 according to the present embodiment. Terminal 200 illustrated in FIG. 9 includes receiver 201, LBT carrier sensing processor 202, signal separator 203, demodulator 204, error correction decoder 205, control signal receiver 206, LBT failure indication receiver 207, error correction encoder 208, modulator 209, control signal generator 210, LBT failure indication generator 211, signal assigner 212, and transmitter 213.

Note that, at least one of LBT carrier sensing processor 202, signal separator 203, demodulator 204, error correction decoder 205, control signal receiver 206, LBT failure indication receiver 207, error correction encoder 208, modulator 209, control signal generator 210, LBT failure indication generator 211, and signal assigner 212 may be included in the controller illustrated in FIG. 4. Further, at least one of receiver 201 and transmitter 213 may be included in the communicator illustrated in FIG. 4.

Terminal 200 may be a transmission terminal (or transmission source terminal) that transmits a sidelink signal in sidelink communication or a reception terminal (or destination terminal) that receives a sidelink signal in sidelink communication.

Receiver 201 receives a reception signal via an antenna, and performs reception processing such as down-conversion on the reception signal. The reception signal may be, for example, a sidelink signal including PSSCH and/or PSCCH. Note that the sidelink signal may include PSFCH. Further, the reception signal received by receiver 201 may include an idle period or may include a signal other than a sidelink signal (downlink signal from base station 100). Receiver 201 outputs the reception signal after the reception processing to LBT carrier sensing processor 202 and signal separator 203.

LBT carrier sensing processor 202 performs carrier sense (also referred to as LBT) based on the reception signal input from receiver 201. LBT carrier sensing processor 202 may judge, based on the reception signal, whether the channel state is "busy (or LBT failure)" or "idle (or LBT OK)." In other words, LBT carrier sensing processor 202 may judge whether the channel is available based on the reception signal input from receiver 201. LBT carrier sensing processor 202 outputs information indicating the judged channel state to LBT failure indication generator 211 and transmitter 213.

Signal separator 203 outputs, to demodulator 204, a reception data signal of the reception signal input from receiver 201. The reception data signal is, for example, mapped to PSSCH. Further, signal separator 203 separates the 1st stage SCI to be mapped to PSCCH and the 2nd stage SCI to be mapped to a part of PSSCH from the reception signal input from receiver 201. Signal separator 203 outputs the separated information to control signal receiver 206. Additionally, signal separator 203 separates the LBT failure indication mapped to PSFCH from the reception signal input from the receiving unit 201, and the outputs the separated LBT failure indication to LBT failure indication receiver 207.

Demodulator 204 performs demodulation processing on the reception data signal input from signal separator 203. Demodulator 204 outputs the demodulated signal obtained through the demodulation processing to error correction decoder 205.

Error correction decoder 205 decodes the demodulated signal input from demodulator 204 and outputs the decoded signal as reception data.

Control signal receiver 206 identifies (or grasps) resource allocation information including a reserved resources, based on the 1st stage SCI included in the signal input from signal separator 203. Control signal receiver 206 then outputs, to signal assigner 212, the resource allocation information to avoid overlap with another resource. Further, control signal receiver 206 identifies (or grasps) the transmission ID and the reception ID based on the 2nd stage SCI included in the signal input from signal separator 203. Control signal receiver 206 judges whether resource allocation for terminal 200 is present, based on the specified transmission ID and reception ID. In a case where the resource allocation for terminal 200 is present, control signal receiver 206 instruct signal separator 203 to separate the reception signal.

LBT failure indication receiver 207 receives an LBT failure indication from the transmission source terminal which is included in the signal input from signal separator 203. Further, in a case where it is determined that an additional resource is allocated based on the LBT failure indication, for example, LBT failure indication receiver 207 indicates the separation of the reception signal to signal separator 203. Note that LBT failure indication receiver 207 may be operated, for example, in a case where Operation Example 3 described above is applied.

Error correction encoder 208 inputs a data signal, performs error correction encoding on the data signal and outputs the data signal subjected to the error correction encoding to modulator 209.

Modulator 209 modulates the signal input from error correction encoder 208 and outputs the modulated signal to signal assigner 212.

Control signal generator 210 generates signals for the 1st stage SCI and the 2nd stage SCI from the control information that is not illustrated. Control signal generator 210 outputs the signals for the 1st stage SCI and the 2nd stage SCI to signal assigner 212.

LBT failure indication generator 211 generates information on an indication of an LBT failure in a case where the slot in which transmission is scheduled results in the LBT failure, based on the information input from LBT carrier sensing processor 202. For example, in the case of Operation Example 1 described above, LBT failure indication generator 211 may generate information on the LBT failure indication to be transmitted to base station 100. Further, for example, in the case of Operation Example 3 described above, LBT failure indication generator 211 may determine whether to allocate an additional resource and generate a signal indicating the presence or absence of the allocation of the additional resource. LBT failure indication generator 211 outputs the generated signal to signal assigner 212.

Signal assigner 212 assigns the modulated signal input from modulator 209 to a resource. At that time, signal assigner 212 may assign the signal to the resource by taking into account the signal input from control signal generator 210. Further, signal assigner 212 assigns the signal input from LBT failure indication generator 211 to a resource. For example, in the case of Operation Example 1 described above, signal assigner 212 may assign the signal input from LBT failure indication generator 211 to PUCCH or PUSCH. Further, for example, in the case of Operation Example 3 described above, signal assigner 212 may assign the signal input from LBT failure indication generator 211 to PSFCH. After performing the resource allocation, signal assigner 212 outputs the transmission signal to transmitter 213.

In a case where the sensing result acquired from LBT carrier sensing processor 202 indicates an idle state, transmitter 213 performs transmission processing such as up-conversion on the transmission signal input from signal assigner 212, and transmits the transmission signal after the transmission processing via an antenna.

The operation examples according to the present embodiment have been each described, thus far.

As described above, in the present embodiment, in a case where the LBT failure occurs, terminal 200 allocates the next resource through the LBT failure indication to base station 100, the resource selection by terminal 200, or the LBT failure indication to the destination terminal (including additional resource reservation). Thus, even in a case where the transmission right cannot be acquired, terminal 200 can transmit a sidelink signal using the next resource. Therefore, according to the present embodiment, it is possible to improve the resource-utilization efficiency in sidelink communication in an unlicensed band.

### (Embodiment 2)

In the present embodiment, terminal 200a transmits and receives a sidelink signal using a plurality of consecutive slots in sidelink communication.

Hereinafter, an allocation method in which the plurality of slots are consecutively allocated and a transmission method using the plurality of consecutive slots (hereinafter, also referred to as "consecutive slots") will be described.

For example, transmission source terminal 200a may indicate the allocation of the consecutive slots by SCI transmitted in PSCCH/PSSCH. As examples of indication methods for the allocation of the consecutive slots, two methods will be described.

### [Indication Method 1]

In Indication Method 1, the allocation of the consecutive slots may be indicated by SCI format 1-A (see, for example, NPL 4).

For example, the allocation of the consecutive slots may be indicated using the "Time resource assignment" included in SCI format 1-A. For example, SCI format 1-A is defined by standards as follows (see, for example, NPL 4):
Time resource assignment - 5 bits when the value of the higher layer parameter *sl-MaxNumPerReserve* is configured to 2; otherwise 9 bits when the value of the higher layer parameter *sl-MaxNumPerReserve* is configured to 3, as defined in clause 8.1.5 of [6, TS 38.214].

For example, in the "Time resource assignment," it is possible to reserve PSSCH in later two slots in addition to PSSCH in the same slot as the slot in which PSCCH (SCI format 1-A) is transmitted. At this time, in the "Time resource assignment," the two most recent slots can be specified.

According to Indication Method 1, the allocation of the consecutive slots can be performed using existing parameters or formats.

### [Indication Method 2]

In Indication Method 2, an indication field indicating the allocation of the consecutive slots may be newly added to SCI format 1-A or may be defined in a new SCI format.

For example, as an indication method for consecutive slots, an indication of transmission in consecutive K slots including the slot in which the SCI format is transmitted may be added to the SCI format.

For example, in a case where the consecutive transmission in three slots of slot N, slot N + 1, and slot N + 2, is allocated, the number of allocation slots is counted down for each slot, and the remaining number of consecutive slots at the time of SCI transmission may be indicated, as indicated in Table 7. For example, in Table 7, K = 3 may be indicated in slot N, K = 2 may be indicated in slot N + 1, and K = 1 may be indicated in slot N + 2.

**[Table 7]**

| | Slot N | Slot N + 1 | Slot N + 2 |
|---|---|---|---|
| Indication of consecutive slots in SCI | 3 | 2 | 1 |

Alternatively, for example, whether one slot located later than the slot in which the SCI is transmitted is consecutively allocated may be indicated by one bit. For example, in a case where the consecutive transmission in three slots of slot N, slot N + 1, and slot N + 2, is allocated, 1 indicating the presence of later slot may be indicated in slot N and slot N + 1 after which one later slot is also consecutively allocated, whereas, 0 indicating that the absence of later slot may be indicated in slot N + 2 after which the consecutive transmission in one later slot is not allocated, as illustrated in Table 8.

**[Table 8]**

| | Slot N | Slot N + 1 | Slot N + 2 |
|---|---|---|---|
| Indication of consecutive slots in SCI | 1 | 1 | 0 |

Examples of the indication methods for the allocation of consecutive slots have been each described, thus far.

Next, operation examples of sidelink communication in a case where the allocation of consecutive slots is indicated using these indication methods will be described.

### [Operation Example 1]

In Operation Example 1, when performing transmission in consecutive slots, transmission source terminal 200a transmits, in a slot among the consecutive slots where consecutive transmission is performed also in a later (subsequent) slot, PSSCH even in a symbol in the interval corresponding to the last guard period of the slot. For example, when terminal 200a performs the transmission in consecutive slots, the last guard period of a slot need not be configured in a slot where the consecutive transmission is performed also in a later slot.

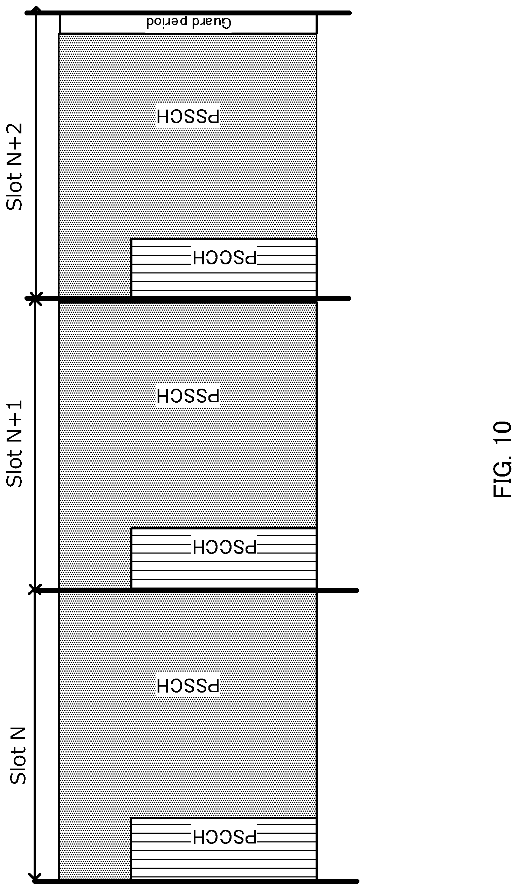

For example, as illustrated in FIG. 10, in a case where three consecutive slots of slot N, slot N + 1, and slot N + 2 are allocated for terminal 200a, transmission source terminal 200a transmits PSSCH even in the symbols of the last guard periods in slot N and slot N + 1. Meanwhile, in slot N + 2, transmission source terminal 200a configures a guard period in the last symbol.

As described above, in Operation Example 1, in a case where a plurality of consecutive slots are allocated in sidelink communication in an unlicensed band, terminal 200a assigns PSSCH to the interval of the guard period configured in an n-th slot (for example, a slot after which a subsequent slot is also used for transmission, i.e., n = N or n = N + 1 in FIG. 10) of the n-th slot and an n + 1-th slot included in the plurality of slots. For example, terminal 200a may assign PSSCH to the interval of the guard period configured in a slot different from the last slot (slot N + 2 in FIG. 10) of the consecutive slots, and may configure the guard period in the last slot.

Thus, transmission source terminal 200a transmits PSSCH in the interval corresponding to the guard period during the transmission in consecutive slots, thereby reducing the probability of the transmission right being acquired by another system or another apparatus. This makes it possible to reduce the probability of the LBT failure in transmission source terminal 200 and to increase the probability that transmission source terminal 200 can perform the transmission in the consecutive slots.

Note that, when performing the transmission in consecutive slots, terminal 200a need not perform LBT between the consecutive slots and may perform LBT Type 2C. Thus, the number of times that transmission source terminal 200 performs LBT can be reduced.

Here, another terminal different from terminal 200a that performs the transmission in consecutive slots may perform transmission (for example, frequency division multiplexing transmission (FDM)) simultaneously using a different PRB within the same RB set as the RB set used by terminal 200a for the transmission of the sidelink signal. In this case, when terminal 200a transmits PSSCH with a symbol corresponding to the guard period, another terminal may detect the signal (PSSCH) of terminal 200a in the guard period by Type 2 LBT, resulting in the an LTB failure, and cannot start transmission in some cases.

Accordingly, in Operation Example 1, the following conditions for transmitting PSSCH in a symbol of the guard period may be configured.

### <Condition 1>

In Condition 1, Operation Example 1 may be applied in a case where all PRBs in the RB set are allocated, in the PSSCH allocation.

In a case where a sidelink signal is assigned to all PRBs in the RB set used for the transmission of the sidelink signal, terminal 200a may assign a sidelink signal (for example, PSSCH) to the interval of the guard period.

Thus, terminal 200a can apply Operation Example 1 in a case where it is assumed that another terminal is not transmitting a signal simultaneously within the RB set. For example, in a case where another terminal is transmitting a signal simultaneously within the RB set, terminal 200a assigns no sidelink signal to the interval of the guard period, thereby preventing interruption of LBT (e.g., Type 2 LBT) performed by another terminal.

Note that the RB set is, for example, a frequency unit configured every 20 MHz unit, is the minimum unit for performing LBT, and is also referred to as an LBT set.

### <Condition 2>

In Condition 2, Operation Example 1 may be applied in a case where X% or more of PRBs in the RB set are allocated, in the PSSCH allocation.

In a case where a sidelink signal is assigned to PRBs equal to or larger than a threshold (for example, X% or more of PRBs) in the RB set used for the transmission of the sidelink signal, terminal 200a may assign a sidelink signal (for example, PSSCH) to the interval of the guard period.

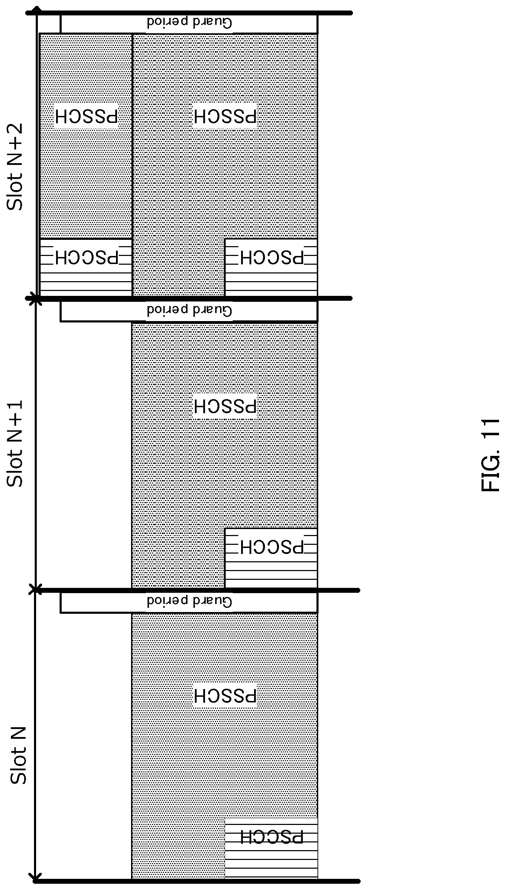

Thus, terminal 200a may determine that one terminal may perform transmission in the RB set (the LBT failure may occur in another terminal) as long as PRBs with a resource amount equal to or larger than the threshold are occupied, even if not all PRBs within the RB set. For example, in a case where X% or more of PRBs in the RB set are allocated, terminal 200a may transmit PSSCH in a symbol corresponding to the guard period as illustrated in FIG. 10 (without configuration of the guard period), and in a case where less than X% of PRBs in the RB set are allocated, terminal 200a may configure the guard period as illustrated in FIG. 11 (with configuration of the guard period). For example, it is possible to prevent interruption of LBT (e.g., Type 2 LBT) performed by another terminal by allocating no sidelink signal to the interval of the guard period and configuring the guard period. For example, configuration of the guard period prevents the transmission of terminal 200a from affecting the LBT performed by another terminal, allowing a later slot (for example, slot N + 2 in FIG. 11) to be used by another terminal.

### <Condition 3>

In Condition 3, Operation Example 1 may be applied in a case where the PSSCH is assigned to the same PRB between consecutive slots. For example, in a case where the PRBs to which PSSCH is assigned vary between the consecutive slots, Operation Example 1 need not be applied.

In a case where a sidelink signal is assigned to the same PRB in each of the consecutive slots, terminal 200a may assign the sidelink signal (for example, PSSCH) to the interval of the guard period.

For example, in a case where terminal 200a to which consecutive slots are allocated performs transmission in different PRBs within the same RB set in each of the consecutive slots, a guard period is configured at the end of the slot, so that the transmission of terminal 200a does not affect the LBT performed by another terminal, allowing consecutive transmission (or multiplex transmission) in a plurality of terminals within the RB set.

The conditions for executing Operation Example 1 have been each described, thus far.

Note that the signal transmitted in the symbol of the last guard period of the slot may be transmitted in a part of the time corresponding to the symbol. In this case, the signal transmitted in the symbol of the guard period may be a part of a repetition signal of the signal transmitted in the second symbol from the last symbol.

Further, the consecutive slots are not slots that are consecutive within a sidelink resource pool, but slots that are consecutive on the time axis.

### [Operation Example 2]

In Operation Example 2, in a case where terminal 200a receives the SCI for slot N transmitted by another terminal and detects that "remaining COT duration" indicated in slot N is K, terminal 200a may determine that transmission can be performed from the next slot N + 1 up to consecutive K - 1 slots.

For example, the consecutive slots may be configured within a period of the COT. Further, terminal 200a may configure a guard period in at least the last slot in the period of the COT of the consecutive slots.

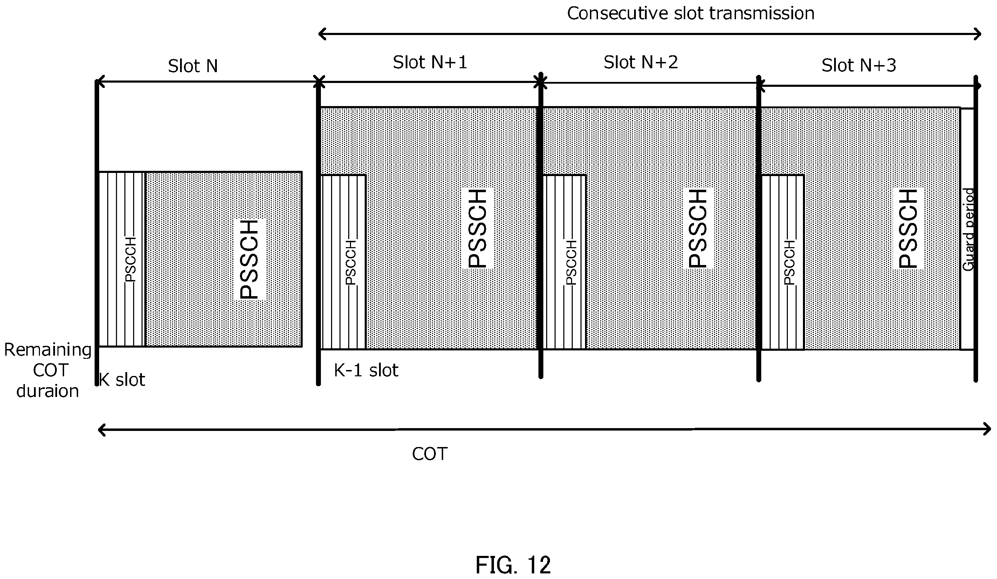

For example, as illustrated in FIG. 12, in a case where the remaining COT duration included in the SCN of another terminal received in slot N is K = 3, terminal 200a may perform the transmission in consecutive slots from slot N + 1 up to slot N + 2, which is the second consecutive slot (K - 1 slot). At this time, as illustrated in FIG. 12, terminal 200a may transmit PSSCH in the interval of the guard period in slot N + 1 and slot N + 2 and may configure the guard period in slot N + 2 (PSSCH need not be transmitted).

Thus, for example, terminal 200a can fit the consecutive slots transmission within the period of the COT and can avoid consecutive transmission that exceeds the COT. Further, terminal 200a can configure a guard period at the end of the COT. Avoiding the consecutive transmission that exceeds the COT in this manner makes it possible to maintain fairness with other apparatuses.

Note that, in a case where the remaining COT duration is not sufficient for the resource that transmission source terminal 200a assumes for the consecutive transmission, the following methods may be applied.

### <Method 1>

Transmission source terminal 200a performs Type 1 LBT and acquires a new COT without using the COT duration acquired by another terminal. Thus, terminal 200a can configure (or acquire) a COT duration with a length to be used for the consecutive transmission.

### <Method 2>

Transmission source terminal 200a transmits a signal consecutively in K - 1 slots, which is the remaining COT duration. Thus, terminal 200a can transmit a signal in the remaining slots within the COT.

### <Method 3>

After transmitting a signal consecutively in K - 1 slots, which is the remaining COT duration, transmission source terminal 200a performs Type 1 LBT to acquire a new COT and transmits the remaining signal. Thus, terminal 200a can transmit a signal with reduced latency in the consecutive transmission compared to other methods.

Methods 1 to 3 have been each described, thus far.

Further, as another method, in a case where transmission source terminal 200a performs the transmission in consecutive slots, transmission source terminal 200a may acquire and transmit COT. Thus, it is possible to specify the COT duration to be used for the consecutive transmission.

### [Configuration Example of Terminal 200a]

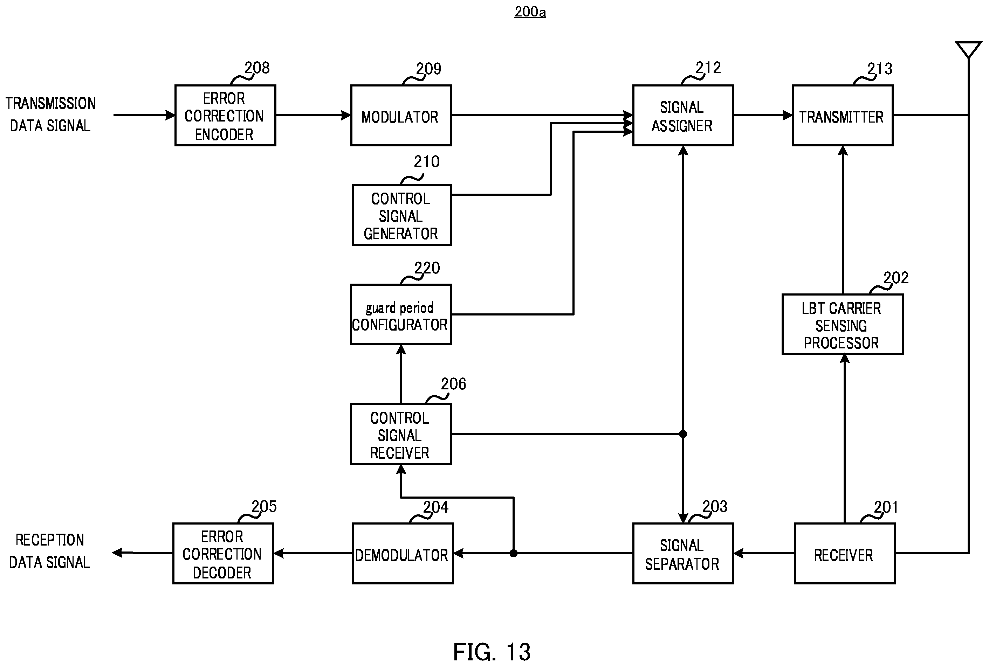

FIG. 13 is a block diagram illustrating an exemplary configuration of terminal 200a according to the present embodiment. Terminal 200a illustrated in FIG. 13 includes receiver 201, LBT carrier sensing processor 202, signal separator 203, demodulator 204, error correction decoder 205, control signal receiver 206, error correction encoder 208, modulator 209, control signal generator 210, guard period configurator 220, signal assigner 212, and transmitter 213.

Terminal 200a illustrated in FIG. 13 is different from terminal 200 illustrated in FIG. 9 in that terminal 200a does not include LBT failure indication receiver 207 and LBT failure indication generator 211 and newly includes guard period configurator 220.

Note that at least one of LBT carrier sensing processor 202, signal separator 203, demodulator 204, error correction decoder 205, control signal receiver 206, error correction encoder 208, modulator 209, control signal generator 210, guard period configurator 220, and signal assigner 212 may be included in the controller illustrated in FIG. 4. Further, at least one of receiver 201 and transmitter 213 may be included in the communicator illustrated in FIG. 4.

Terminal 200a may be a transmission terminal (or a transmission source terminal) that transmits a sidelink signal in sidelink communication or may be a reception terminal (or a destination terminal) that receives a sidelink signal.

Receiver 201 receives a reception signal via an antenna, and performs reception processing such as down-conversion on the reception signal. The reception signal may be, for example, a sidelink signal including PSSCH and/or PSCCH. Note that the sidelink signal may include PSFCH. Further, the reception signal received by receiver 201 may include an idle period or may include a signal other than a sidelink signal (downlink signal from base station 100). Receiver 201 outputs the reception signal after the reception processing to LBT carrier sensing processor 202 and signal separator 203.

LBT carrier sensing processor 202 performs carrier sense (also referred to as LBT) based on the reception signal input from receiver 201. LBT carrier sensing processor 202 may judge, based on the reception signal input from receiver 201, whether the channel state is "busy (or LBT failure)" or "idle (or LBT OK)." In other words, LBT carrier sensing processor 202 may judge whether the channel is available based on the reception signal input from receiver 201. LBT carrier sensing processor 202 outputs information indicating the judged channel state to transmitter 213.

Signal separator 203 outputs, to demodulator 204, a reception data signal of the reception signal input from receiver 201. The reception data signal is, for example, mapped to PSSCH. Further, signal separator 203 separates the 1st stage SCI to be mapped to PSCCH and the 2nd stage SCI to be mapped to a part of PSSCH from the reception signal input from receiver 201. Signal separator 203 outputs the separated information to control signal receiver 206.

Demodulator 204 performs demodulation processing on the reception data signal input from signal separator 203. Demodulator 204 outputs the demodulated signal obtained through the demodulation processing to error correction decoder 205.

Error correction decoder 205 decodes the demodulated signal input from demodulator 204 and outputs the decoded signal as reception data.

Control signal receiver 206 identifies (or grasps) resource allocation information including a reserved resources, based on the 1st stage SCI included in the signal input from signal separator 203. Control signal receiver 206 then outputs, to guard period configurator 220 and signal assigner 212, the resource allocation information to avoid overlap with another resource. Further, control signal receiver 206 identifies (or grasps) the transmission ID and the reception ID based on the 2nd stage SCI included in the signal input from signal separator 203. Control signal receiver 206 judges whether resource allocation for terminal 200 is present, based on the specified transmission ID and reception ID. In a case where the resource allocation for terminal 200 is present, control signal receiver 206 instruct signal separator 203 to separate the reception signal.

Error correction encoder 208 inputs a data signal, performs error correction encoding on the data signal and outputs the data signal subjected to the error correction encoding to modulator 209.

Modulator 209 modulates the signal input from error correction encoder 208 and outputs the modulated signal to signal assigner 212.

Control signal generator 210 generates signals for the 1st stage SCI and the 2nd stage SCI from the control information that is not illustrated. Control signal generator 210 outputs the signals for the 1st stage SCI and the 2nd stage SCI to signal assigner 212.

Guard period configurator 220 determines whether consecutive resources (for example, consecutive slots) are allocated based on information on a transmission signal (not illustrated) and the information input from control signal receiver 206, and in a case where the consecutive resources are allocated, indicates the configuration of the guard period (for example, the presence or absence of the configuration) to signal assigner 212.

Signal assigner 212 assigns the modulated signal input from modulator 209 to a resource. At that time, signal assigner 212 may assign the signal to the resource by taking into account the signal input from control signal generator 210. Further, signal assigner 212 determines the number of symbols of PSSCH (or the presence or absence of the configuration of the guard period) according to the information input from guard period configurator 220, and allocates resources. After performing the resource allocation, signal assigner 212 outputs the transmission signal to transmitter 213.

In a case where the sensing result acquired from LBT carrier sensing processor 202 indicates an idle state, transmitter 213 performs transmission processing such as up-conversion on the transmission signal input from signal assigner 212, and transmits the transmission signal after the transmission processing via an antenna.

The operation examples according to the present embodiment have been each described, thus far.

As described above, in Embodiment 2, terminal 200a assigns PSSCH to the guard period configured in an n-th slot of the n-th slot and an n + 1-th slot included in consecutive slots, in a case where the consecutive slots are allocated in sidelink communication in an unlicensed band. Thus, for example, when terminal 200a uses consecutive slots, it is possible to reduce the possibility that the transmission right is acquired by another apparatus in the interval of the consecutive slots, and the sidelink signal can be transmitted. Therefore, according to the present embodiment, it is possible to improve the resource-utilization efficiency in sidelink communication in an unlicensed band.

Note that the signal transmitted in the symbol of the guard period is not limited to PSSCH and may be other signals.

Further, in a case where channel sensing of Type 2A or Type 2B is required in the transmission in consecutive slot, the time interval used for Type 2A or Type 2B in the guard period may be configured as the guard period.

Each of the embodiments has been described, thus far.

### [Variation]

Note that, the operation examples of the embodiments described above may be used in combination.

Further, terminals that perform transmission and/or reception in sidelink include a terminal that performs transmission and does not perform reception in sidelink, a terminal that performs reception and does not perform transmission in sidelink, and a terminal that performs both transmission and reception in sidelink.

Further, when a configuration relating to sidelink is configured in advance, the configuration method may be configured in advance in specifications (standards) or may be configured in advance in a subscriber identity module (SIM). Alternatively, the configuration relating to sidelink may be configured in an application layer called pre-configured, in a higher layer such as a system information block (SIB) called configured and/or another radio resource control (RRC), or in a medium access control (MAC).

Further, each of the embodiments described above illustrates the case of sidelink communication, but the present disclosure is not limited thereto. For example, in each embodiment described above, PSCCH may be replaced with PDCCH, PSSCH may be replaced with PDSCH or PUSCH, PSFCH may be replaced with PUCCH, and PSBCH may be replaced with PBCH, and the present disclosure may be applied to communication between the base station and the terminal.

Further, each of the embodiments described above may be applied to Mode 2 and may not be applied to Mode 1, or may be applied to both Mode 1 and Mode 2, or may be applied to Mode 1 and may not be applied to Mode 2. Further, in the operation examples in the embodiments described above, an operation example to which Mode 1 is applied and an operation example to which Mode 2 is applied may be the same or different. For example, there may be an operation example that is applied to Mode2 and is not applied to Mode1.

Further, when each of the embodiments described above is applied to Mode 1, which of Type 2A, 2B, and 2C in Type 2 LBT is selected may be instructed by the base station in a licensed band.

Further, in the embodiments described above, operation examples in an unlicensed band have been indicated, but the frequency band of an unlicensed band may vary from country to country or may vary for each region. The frequency band of an unlicensed band includes, illustratively, the 5 GHz band (5150 MHz to 5925 MHz), the 6 GHz band (5925 MHz to 7125 MHz), and 52.6 GHz to 71 GHz.

Further, the usability of each of the above-described embodiments or each of the operation examples may be changed according to the SCS.

Further, Type 1 LBT and Type 2 LBT may be called by another names in sidelink communication.

The SCI format to be transmitted in PSCCH may be SCI format 1-A or a newly added SCI format.

Further, the above-described embodiments may be applied to S-PSS/SSS/PSBCH.

Further, in each of the above-described embodiments, the destination terminal may refer to a plurality of terminals for groupcast and broadcast.

The guard band may also be referred to as an intra-cell guard band.

Further, the resource allocation for sidelink communication illustrated in each of the embodiments described above is an example, and the present disclosure is not limited thereto. For example, signals, channels, idle periods, or the like that are not illustrated may be included in resources for the sidelink communication. Further, the widths of signals in the time direction and frequency direction illustrated in the drawings are not limited to the illustrated examples. Further, the size of a slot, the size of a resource, the size of a channel, the size of a signal, and the like are not limited to the examples described above. Further, the value of the SCS, the sensing interval of the LBT, and the like are not limited to those in the examples described above.

Further, each of the embodiments described above has exemplified a case in which the duration of a sidelink signal is adjusted by increasing the CP duration of the sidelink signal by the CP extension, but the present disclosure is not limited thereto. Instead of increasing the CP duration, the duration may be adjusted by adding a known signal.

Further, in each of the embodiments described above, the confirmation of availability of the channel may be replaced with an expression such as sensing (or monitoring) of availability of the channel. Further, in this case, the term "channel" may be replaced with other terms such as "carrier" or "resource."

Further, the indication method of control information from base station 100 to terminal 200 is not limited to the example described above, and the control information may be indicated (or broadcast, instructed, configured) by at least one of system information such as MIB and SIB, RRC control information, MAC control information, and downlink control information (DCI), may be configured in advance to terminal 200, and/or may be predefined in specifications.

The base station may be referred to as a gNodeB or a gNB. Further, the terminal may be referred to as UE.

The time resource unit such as a slot may be replaced with another unit such as a system frame, a time slot, a minislot, a frame, a subframe, a block, or the like.

Further, any term ending with a suffix, such as "-er" "-or" or "-ar", in the embodiments described above may be replaced with another term, such as "circuitry," "device," "unit," or "module."

Note that the terms "interpret," "identify," "determine," "judge," "decide," "calculate," "grasp," "recognize," "confirm," or "understand" may be used interchangeably.

### (Complement)

Information indicating whether terminal 200 supports the functions, operations, or pieces of processing that have been indicated in the above-mentioned embodiments may be transmitted (or indicated) from terminal 200 to base station 100, as capability information or a capability parameter for terminal 200, for example.

The capability information may include information elements (IEs) that individually indicate whether terminal 200 supports at least one of the functions, operations, or pieces of processing that have been described in the above-mentioned embodiments. Alternatively, the capability information may include information elements that indicate whether terminal 200 supports a combination of any two or more of the functions, operations, or pieces of processing that have been described in the above-mentioned embodiments.

Base station 100 may determine (or decide or assume), for example, based on the capability information received from terminal 200, the functions, operations, or processes that are supported (or not supported) by terminal 200, which is a transmission source of the capability information. Base station 100 may execute operations, processes, or control in accordance with a determination result based on the capability information. For example, base station 100 may control sidelink communication between terminals 200 based on the capability information received from terminal 200.

Note that in a case where terminal 200 does not entirely support the functions, operations, or pieces of processing described in the above-mentioned embodiments, such an unsupported part of the functions, operations, or processes may be interpreted as a limitation in terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

### (Control Signals)

In the present disclosure, the downlink control signal (or downlink control information) related to an exemplary embodiment of the present disclosure may be, for example, a signal (or information) transmitted in a physical downlink control channel (PDCCH) in a physical layer or may be a signal (or information) transmitted in a medium access control control element (MAC CE) or a radio resource control (RRC) in a higher layer. Further, the signal (or information) is not limited to that indicated by the downlink control signal, but may be predefined in specifications (or standards) or may be configured in advance to the base station and the terminal.

In the present disclosure, the uplink control signal (or uplink control information) according to an exemplary embodiment of the present disclosure may be, for example, a signal (or information) transmitted in PUCCH in the physical layer or may be a signal (or information) transmitted in the MAC CE or RRC in the higher layer. Further, the signal (or information) is not limited to that indicated by the uplink control signal, but may be predefined in specifications (or standards) or may be configured in advance to the base station and the terminal. Further, the uplink control signal may be replaced with, for example, uplink control information (UCI), 1st stage sidelink control information (SCI) or 2nd stage SCI.

### (Base Station)

In an exemplary embodiment of the present disclosure, the base station may be, for example, a transmission reception point (TRP), a clusterhead, an access point, a remote radio head (RRH), an eNodeB (eNB), a gNodeB (gNB), a base station (BS), a base transceiver station (BTS), a base unit, a gateway, or the like. Further, in sidelink communication, the terminal may play a role of the base station. Furthermore, instead of the base station, a relay apparatus that relays communication between a higher node and a terminal may be used. The base station may be a roadside unit as well.

### (Uplink/Downlink/Sidelink)

An exemplary embodiment of the present disclosure may be applied to, for example, any of uplink, downlink, and sidelink. For example, an exemplary embodiment of the present disclosure may be applied to uplink channels, such as a Physical Uplink Shared Channel (PUSCH), a Physical Uplink Control Channel (PUCCH), and a Physical Random Access Channel (PRACH), downlink channels, such as a Physical Downlink Shared Channel (PDSCH), PDCCH, and a Physical Broadcast Channel (PBCH), and side link channels, such as a Physical Sidelink Shared Channel (PSSCH), a Physical Sidelink Control Channel (PSCCH), and a Physical Sidelink Broadcast Channel (PSBCH).

Note that, PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

An exemplary embodiment of the present disclosure may be applied to, for example, any of data channels and control channels. For example, channels in an exemplary embodiment of the present disclosure may be replaced with any of data channels including PDSCH, PUSCH, and PSSCH, or control channels including PDCCH, PUCCH, PBCH, PSCCH, and PSBCH.

### (Reference Signals)

In an exemplary embodiment of the present disclosure, the reference signals are, for example, signals known to both a base station and a mobile station and each reference signal may be referred to as a reference signal (RS) or sometimes a pilot signal. Each reference signal may be any of a Demodulation Reference Signal (DMRS), a Channel State Information-Reference Signal (CSI-RS), a Tracking Reference Signal (TRS), a Phase Tracking Reference Signal (PTRS), a Cell-Specific Reference Signal (CRS), or a Sounding Reference Signal (SRS).

### (Time Intervals)

In an exemplary embodiment of the present disclosure, time resource units are not limited to one or a combination of slots and symbols, and may be time resource units, such as frames, superframes, subframes, slots, time slots, subslots, minislots, or symbols, orthogonal frequency division multiplexing (OFDM) symbols, single carrier-frequency division multiplexing (SC-FDMA) symbols, or other time resource units. The number of symbols included in one slot is not limited to any number of symbols exemplified in the embodiments described above, and may be other numbers of symbols.

### (Frequency Bands)

An exemplary embodiment of the present disclosure may be applied to any of a licensed band and an unlicensed band.

### (Communication)

An exemplary embodiment of the present disclosure may be applied to any of communication between a base station and a terminal (Uu-link communication), communication between a terminal and a terminal (Sidelink communication), and Vehicle to Everything (V2X) communication. For example, a channel in an exemplary embodiment of the present disclosure may be replaced with any of PSCCH, PSSCH, a Physical Sidelink Feedback Channel (PSFCH), PSBCH, PDCCH, PUCCH, PDSCH, PUSCH, and PBCH.

Further, an exemplary embodiment of the present disclosure may be applied to any of a terrestrial network or a non-terrestrial network (NTN) using a satellite or a high altitude pseudo satellite (HAPS). In addition, the present disclosure may be applied to a network having a large cell size, and a terrestrial network with a large latency compared with a symbol length or a slot length, such as an ultra-wideband transmission network.

### (Antenna Ports)

In an exemplary embodiment of the present disclosure, an antenna port refers to a logical antenna (antenna group) formed of one or more physical antenna(s). For example, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### <5G NR System Architecture and Protocol Stack>

3GPP has been working at the next release for the 5th generation cellular technology, simply called 5G, including the development of a new radio access technology (NR) operating in frequencies ranging up to 100 GHz. The first version of the 5G standard was completed at the end of 2017, which allowed proceeding to 5G NR standard-compliant trials and commercial deployments of terminals (e.g., smartphones).

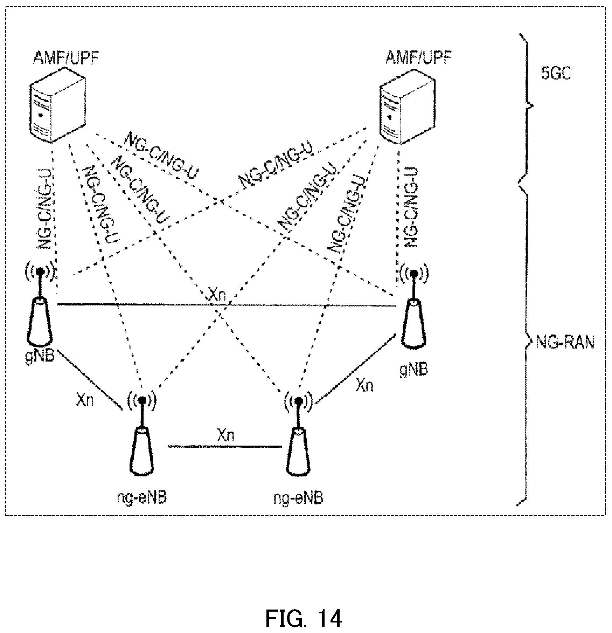

For example, the overall system architecture assumes an NG-RAN (Next Generation-Radio Access Network) that includes gNBs. The gNB provides the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 14 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC, and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates in the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration Tu and the subcarrier spacing Δf are directly related through the formula Δf = 1/Tu. In a similar manner as in LTE systems, the term "resource element" can be used to denote a minimum resource unit being composed of one subcarrier for the duration of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

### <Functional Split between NG-RAN and 5GC in 5G NR>

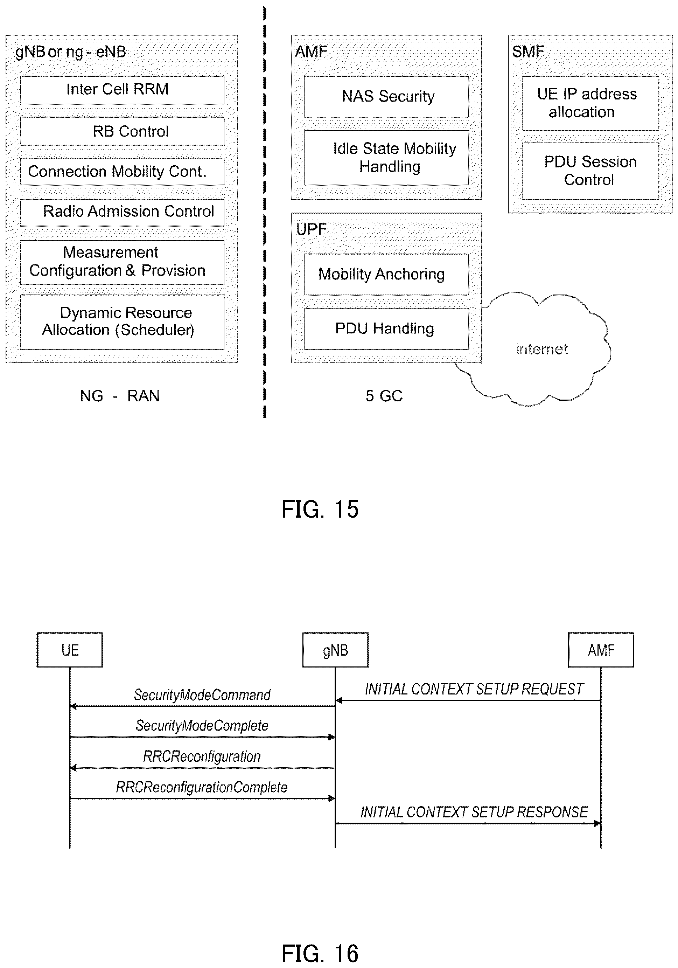

FIG. 15 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:
- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an action management maintenance function (OAM: Operation, Admission, Maintenance));
- Measurement and measurement reporting configuration for mobility and scheduling;
- Transport level packet marking in uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:
- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:
- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:
- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

### <RRC Connection Setup and Reconfiguration Procedure>

FIG. 16 illustrates some interactions between a UE, gNB, and AMF (a 5GC Entity) performed in the context of a transition of the UE from RRC_IDLE to RRC_CONNECTED for the NAS part (see TS 38 300 v15.6.0).

The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer (s), DRB (s) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB informs the AMF that the setup procedure is completed with INITIAL

### CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which, in operation, transmits an initial context setup message to the gNodeB via the NG connection such that a signaling radio bearer between the gNodeB and a User Equipment (UE) is configured up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

### <Usage Scenarios of IMT for 2020 and beyond>

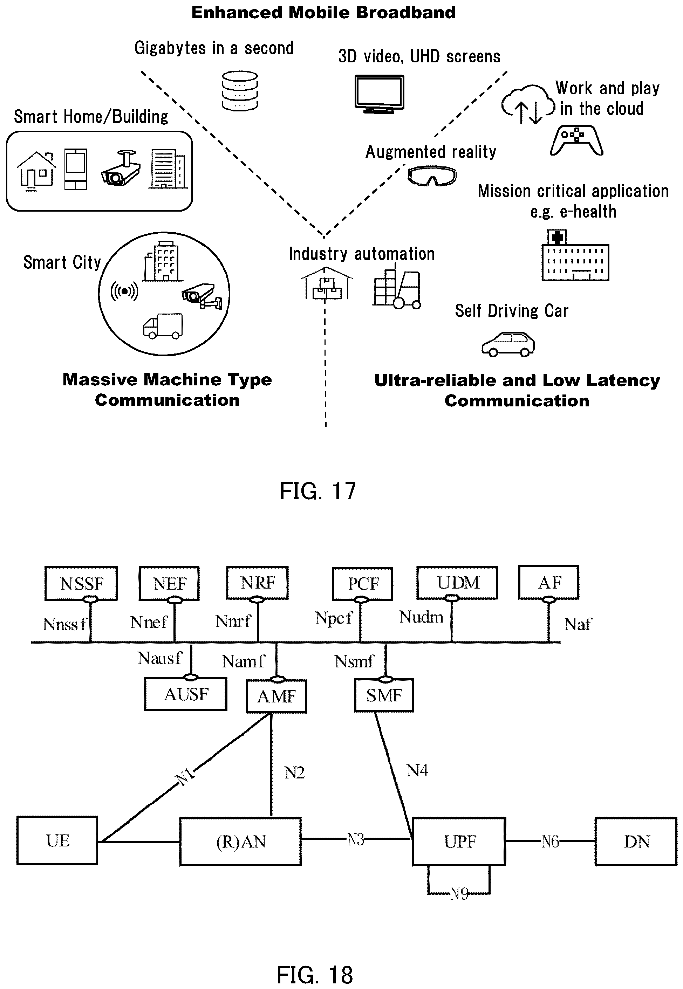

FIG. 17 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 17 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements configured by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-latency sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been identified such as factory automation, transport industry and electrical power distribution. The tighter requirements are higher reliability (up to 10-6 level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

### <QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearer (DRB) together with the PDU Session, e.g., as illustrated above with reference to FIG. 16. Further, additional DRB (s) for QoS flow (s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

FIG. 18 illustrates a 5G NR non-roaming reference architecture (see TS 23.501 v16.1.0, section 4.23). An Application Function (AF), e.g., an external application server hosting 5G services, exemplarily described in FIG. 17, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 18 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that includes: a transmitter, which, in operation, transmits a request containing a QoS requirement for at least one of URLLC, eMMB and mMTC services to at least one of functions (for example NEF, AMF, SMF, PCF,UPF, etc.) of the 5GC to establish a PDU session including a radio bearer between a gNodeB and a UE in accordance with the QoS requirement; and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas. Some non-limiting examples of such a communication apparatus include a phone (e.g., cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A communication apparatus according to an exemplary embodiment of the present disclosure includes: control circuitry, which, in operation, in a case where a plurality of time resources consecutive in time are allocated in terminal-to-terminal communication in an unlicensed band, assigns a signal to a guard interval configured in an n-th time resource of the n-th time resource and an n + 1-th time resource included in the plurality of time resources; and transmission circuitry, which, in operation, transmits the signal with the plurality of time resources.

In an exemplary embodiment of the present disclosure, the control circuitry assigns the signal to the guard interval in a case where the signal is assigned to all resource blocks in a resource block set used for transmission of the signal.

In an exemplary embodiment of the present disclosure, the control circuitry assigns the signal to the guard interval in a case where the signal is assigned to a resource block equal to or larger than a threshold in a resource block set used for transmission of the signal.

In an exemplary embodiment of the present disclosure, the control circuitry assigns the signal to the guard interval in a case where the signal is assigned to the same frequency resource in each of the plurality of time resources.

In an exemplary embodiment of the present disclosure, the plurality of time resources are configured within a channel occupation time, and the control circuitry configures, in the plurality of time resources, the guard interval in at least a last time resource in the channel occupation time.

A communication method according to an exemplary embodiment of the present disclosure includes: assigning, by a communication apparatus, in a case where a plurality of time resources consecutive in time are allocated in terminal-to-terminal communication in an unlicensed band, a signal to a guard interval configured in an n-th time resource of the n-th time resource and an n + 1-th time resource included in the plurality of time resources; and transmitting, by the communication apparatus, the signal with the plurality of time resources.

The disclosure of Japanese Patent Application No. 2022-127362, filed on August 9, 2022, including the specification, drawings and abstract, is incorporated herein by reference in its entirety.

### Industrial Applicability

An embodiment of the present disclosure is useful for radio communication systems.

### Reference Signs List

100 Base station
200, 200a Terminal
201 Receiver
202 LBT carrier sensing processor
203 Signal separator
204 Demodulator
205 Error correction decoder
206 Control signal receiver
207 LBT failure indication receiver
208 Error correction encoder
209 Modulator
210 Control signal generator
211 LBT failure indication generator
212 Signal assigner
213 Transmitter
220 guard period configurator

## Claims

1. A communication apparatus, comprising:
control circuitry, which, in operation, in a case where a plurality of time resources consecutive in time are allocated in terminal-to-terminal communication in an unlicensed band, assigns a signal to a guard interval configured in an n-th time resource of the n-th time resource and an n + 1-th time resource included in the plurality of time resources; and
transmission circuitry, which, in operation, transmits the signal with the plurality of time resources.

2. The communication apparatus according to claim 1, wherein the control circuitry assigns the signal to the guard interval in a case where the signal is assigned to all resource blocks in a resource block set used for transmission of the signal.

3. The communication apparatus according to claim 1, wherein the control circuitry assigns the signal to the guard interval in a case where the signal is assigned to a resource block equal to or larger than a threshold in a resource block set used for transmission of the signal.

4. The communication apparatus according to claim 1, wherein the control circuitry assigns the signal to the guard interval in a case where the signal is assigned to the same frequency resource in each of the plurality of time resources.

5. The communication apparatus according to claim 1, wherein:
the plurality of time resources are configured within a channel occupation time, and
the control circuitry configures, in the plurality of time resources, the guard interval in at least a last time resource in the channel occupation time.

6. A communication method, comprising:
assigning, by a communication apparatus, in a case where a plurality of time resources consecutive in time are allocated in terminal-to-terminal communication in an unlicensed band, a signal to a guard interval configured in an n-th time resource of the n-th time resource and an n + 1-th time resource included in the plurality of time resources; and
transmitting, by the communication apparatus, the signal with the plurality of time resources.
